# EUROPÄISCHE PATENTSCHRIFT

(11) **EP 0 601 479 B1**
(45) Veröffentlichungstag und Bekanntmachung des Hinweises auf die Patenterteilung: **13.09.1995**
(21) Anmeldenummer: 93119427.8
(22) Anmeldetag: 02.12.1993
(51) Int. Cl.: C07F 7/20, C07F 7/12, C07F 7/16

(54) **Verfahren zur Entfernung von wasserstoffhaltigen Silanen aus Methylchlorsilanen**
Process for the removal of hydrogen-containing silanes from methylchlorosilanes
Procédé pour l'élimination de hydrosilanes de méthylchloresilanes

(30) Priorität: 03.12.1992 DE 4240717
(43) Veröffentlichungstag der Anmeldung: 15.06.1994
(73) Patentinhaber: Wacker-Chemie GmbH, 81737 München (DE)
(72) Erfinder: Kalchauer, Wilfried, Dr., D-84489 Burghausen (DE); Pachaly, Bernd, Dr., D-84489 Burghausen (DE); Mautner, Konrad, Dr., D-84556 Kastl (DE); Schinabeck, Anton, D-84489 Burghausen (DE)

(56) Entgegenhaltungen:
- EP-A- 0 205 932
- EP-A- 0 331 123
- EP-A- 0 423 948
- FR-A- 2 163 579
- US-A- 4 156 689

## Beschreibung

Die Erfindung betrifft ein Verfahren zur Entfernung von Silanen mit direkt an Silicium gebundenen Wasserstoffatomen aus den bei der Methylchlorsilansynthese anfallenden Produktgemischen.

Bei der Direktsynthese von Methylchlorsilanen aus Silicium und Methylchlorid bei 250 bis 300°C mit Kupferkatalysatoren entstehen neben den Silanen der allgemeinen Formel MeₓSiCl₄₋ₓ, wobei x die Werte 0 bis 4 hat und Me hier sowie im folgenden eine Methylgruppe bedeutet, in kleinen Mengen auch Ethylchlorsilane, verschiedene Hydrogensilane, vor allem Me_{y}HSiCl_{3-y}, wobei y die Werte 0 bis 2 hat, und Ethyldichlorsilan EtHSiCl₂.

Als Verunreinigungen treten weiterhin verschiedene gerad- und verzweigtkettige Alkane, Alkene und Chlorkohlenwasserstoffe mit bis zu 9 Kohlenstoffatomen auf. Die Direktsynthese ist u.A. in W. Noll, Chemistry and Technology of Silicones, Academic Press, Inc., Orlando, Florida, 1968, Kap. 2.2, beschrieben.

Das begehrteste Zielprodukt der Direktsynthese ist Me₂SiCl₂, das durch Hydrolyse und Polykondensation zu Siliconpolymeren mit vielfältigen funktionellen Gruppen und Strukturen umgesetzt werden kann.

Ein wesentliches Qualitätsmerkmal der meisten Siliconpolymeren ist ein möglichst geringer Anteil an trifunktionellen Verunreinigungen im Polymergerüst. Eine der möglichen trifunktionellen Verunreinigungen des eingesetzten Me₂SiCl₂ ist EtHSiCl₂.

Da sich die Siedepunkte von Me₂SiCl₂ (70-71°C) und EtHSiCl₂ (74-76°C) nur um etwa 4°C voneinander unterscheiden, ist ein sehr hoher destillativer Aufwand, wie hohe Rücklaufverhältnisse, große Anzahl der theoretischen und praktischen Böden, hoher Energiebedarf und reduzierte Raum/Zeit-Ausbeute, erforderlich, um das Me₂SiCl₂ in der für die jeweilige Anwendung erforderlichen Reinheit zu erhalten.

In EP-A 423,948 ist die Umsetzung von wasserstoffhaltigen Alkylsilan-Verunreinigungen mit Chlorwasserstoffgas und geeigneten Katalysatoren aus Pd, Pt, Rh, Ru, Ni, Os, Ir und deren Verbindungen in die entsprechenden Alkylchlorsilane beschrieben. Durch diese Maßnahme wird die Differenz in den Siedepunkten zwischen Zielprodukt und Verunreinigung derart erhöht, daß die Destillation mit erheblich verringertem Aufwand betrieben werden kann.

Der Nachteil bei diesem Verfahren ist, daß Chlorwasserstoff zusätzlich in den Silan-Produktstrom eingebracht werden muß und die Chlorwasserstoffmenge über der stöchiometrisch erforderlichen Menge eingesetzt werden muß. Die überschüssigen Chlorwasserstoffanteile wirken sich bei der anschließenden Destillation störend aus und müssen deshalb zuvor abgetrennt werden. Ein weiterer Nachteil des beschriebenen Verfahrens ist, daß bei einer ursprünglichen H-Silan-Konzentration im Bereich von 10 ppm bis 10 % für eine ausreichende Umwandlung des wasserstoffhaltigen Silans eine Kontaktzeit von über 1 Minute zu bevorzugen ist.

Die Umsetzung von Chlorkohlenwasserstoffen mit halogenfreien wasserstoffhaltigen Silanen in Gegenwart von Edelmetallkatalysatoren unter Ausbildung von Kohlenwasserstoffen und Chlorsilanen ist bekannt aus beispielsweise D. J. Citron, J. E. Lyons; L. H. Sommer, (The Journal of Organic Chemistry, 1969, Vol. 34, S. 638). Auch in diesem Fall hängen die Umsetzungsgrade sehr stark von den einzelnen Komponenten und dem Katalysator ab.

In EP-A 205,932 (D2) ist ein Verfahren zur Herstellung von Organo(poly)siloxanen mit an Silicium direkt gebundenem Chlor durch Umsetzung von direkt an Silicium gebundenen Wasserstoff aufweisendem Organo(poly)siloxan mit Allylchlorid in Gegenwart von metallischem Palladium beschrieben.

In US-A 4,774,347 ist ein Verfahren zur Reduzierung des Chlorkohlenwasserstoffgehaltes in Silanströmen in Gegenwart von wasserstoffhaltigen Silanen mit Hilfe von Lewis-Säuren bildenden Katalysatoren beschrieben. Bei diesem Verfahren werden als Katalysatoren Aluminium, Aluminiumsilicate, Zeolithe, Aluminiumchlorid, Kobaltchlorid, Eisenchlorid, Kupferchlorid, Zinnchlorid, Palladiumchlorid oder Zirkonchlorid eingesetzt.

Der Nachteil bei diesem Verfahren ist, daß sich die halogenhaltigen Katalysatoren in Abhängigkeit von der Temperatur in den Methylchlorsilanen lösen bzw. die angegebenen Oxide und Metalle teilweise in die entsprechenden Chlorverbindungen umgewandelt werden und dadurch in eine lösliche Form überführt werden. Dadurch ist ein Einsatz der angegebenen Katalysatoren bei einer technisch durchgeführten, kontinuierlichen Umsetzung in der Flüssigphase nur bedingt möglich, da der Katalysator vom Trägermaterial abgelöst und mit dem Methylchlorsilanstrom aus dem Reaktionssystem entfernt wird. Dadurch wird die Katalysator-Standzeit stark erniedrigt. Zusätzlich werden die Silane mit Metallhalogeniden verunreinigt. Ein weiterer Nachteil des Verfahrens ist, daß für entsprechende Umsetzungsgrade eine Kontaktzeit der Komponenten am Katalysator von über einer Minute erforderlich ist.

Es bestand die Aufgabe, ein Verfahren zur Entfernung von Silanen mit direkt an Silicium gebundenen Wasserstoffatomen (H-Silane) aus bei der Methylchlorsilansynthese anfallenden Produktgemischen bereitzustellen, bei dem kein Chlorwasserstoff zugesetzt werden muß, bei dem sich der Katalysator nicht in Methylchlorsilanen löst oder mit diesen zu den entsprechenden Halogenverbindungen reagiert und bei dem die Reaktionsgeschwindigkeiten so groß sind, daß Kontaktzeiten am Katalysator von unter einer Minute - bei ausreichenden Umsetzungsgraden - möglich sind.

Die Erfindung betrifft ein Verfahren zur Entfernung von Silanen mit direkt an Silicium gebundenen Wasserstoffatomen aus bei der Methylchlorsilansynthese anfallenden Produktgemischen, wobei die Silane mit direkt an Silicium gebundenen Wasserstoffatomen mit Chlorkohlenwasserstoffen in Gegenwart von metallischem Palladium oder Platin als Katalysatoren zu den entsprechenden Chlorsilanen umgesetzt werden.

Durch das erfindungsgemäße Verfahren können die H-Silane nahezu vollständig zu höhersiedenden Chlorsilanen, bei denen ein Chloratom an der Stelle gebunden ist, an der zuvor das Wasserstoffatom gebunden war, umgesetzt werden. Diese Chlorsilane können, falls sie in dem Produktgemisch unerwünscht sind, leicht destillativ abgetrennt werden.

Weitere Vorteile des erfindungsgemäßen Verfahrens sind, daß der Destillationsaufwand beispielsweise für die Herstellung von reinem Dimethyldichlorsilan erheblich gesenkt werden kann und dadurch die Raum/Zeit-Ausbeute der Kolonnen erheblich gesteigert werden kann, wodurch Energieeinsparung bewirkt wird, für das Verfahren nur kurze Reaktionszeiten benötigt werden, kein Einblasen von Chlorwasserstoff in stöchiometrischen Überschuß erforderlich ist und der Katalysator in fester, im Methylchlorsilan unlöslicher Form vorliegt, d. h. die Umsetzung heterogen katalysiert wird, was den Einsatz des Katalysators in einer Destillationsreaktionskolonne oder in einem Durchflußreaktor ermöglicht und lange Katalysatorstandzeiten gewährleistet.

In keiner der vorstehenden Druckschriften wird darauf hingewiesen, daß die Umsetzung der H-Silane mit Chlorkohlenwasserstoffen in Gegenwart von metallischen Platin- oder Palladiumkatalysatoren als geeignete Methoden zur Entfernung von H-Silanen aus Silan-Produktströmen eingesetzt werden können, da die beschriebenen Reaktionen teilweise relativ unvollständig und/oder relativ langsam ablaufen. Zusätzlich ist für die Entfernung von H-Silanen aus Silan-Produktströmen erforderlich, daß auch geringe Konzentrationen an H-Silanen hinreichend schnell und nahezu vollständig aus den Produktströmen entfernt werden. Die Umsetzung von wasserstoffhaltigen Chlorsilanen mit Chlorkohlenwasserstoff in Gegenwart von metallischen Platin- oder Palladiumkatalysatoren ist nicht beschrieben.

Als Katalysatoren werden metallisches Palladium oder Platin eingesetzt, wobei Palladium besonders bevorzugt ist.

Der Katalysator wird vorzugsweise in feinverteilter Form, wobei er sich bevorzugt auf Trägern befindet, eingesetzt.

Beispiele für Träger sind Aktivkohle, Kohle und anorganische Oxide, wie Siliciumdioxid, Titandioxid, Zirkondioxid; Carbide, wie Siliciumcarbid; wobei Kohle, Aktivkohle und Siliciumdioxid bevorzugte Beispiele sind.

Derartige Katalysatoren, bei denen sich die feinverteilten Metalle auf Trägern befinden, sind käuflich erwerbbar, wie z. B. 1 % Palladium auf Siliciumdioxid bei Heraeus GmbH, Deutschland oder
z. B. 3 % Platin auf Aktivkohle bei Johnson Matthey GmbH, Deutschland.

Die Konzentrationen der Metalle auf den Trägern betragen vorzugsweise 0,8 bis 10 Gew.-%, bezogen auf das Gesamtgewicht des Katalysators, wie sie üblicherweise bei den käuflich erwerbbaren Produkten vorliegen; es können aber auch höhere oder niedrigere Konzentrationen verwendet werden.

Das erfindungsgemäße Verfahren eignet sich besonders gut für den Einsatz bei der Reinigung von Dimethyldichlorsilan, das bedingt durch die Direktsynthese EtHSiCl₂ und Chlorkohlenwasserstoffe sowie gegebenenfalls als weitere Nebenprodukte Alkane und Alkene enthält. In einer bevorzugten Ausführungsform sind bereits so viele Chlorkohlenwasserstoffe in dem zu reinigenden Dimethyldichlorsilan enthalten, daß die H-Silane durch die Behandlung mit metallischem Palladium oder Platin als Katalysatoren nahezu vollständig zu den entsprechenden Chlorsilanen umgesetzt werden.

Die Nebenprodukte der Direktsynthese sind beispielsweise in W. Noll, Chemistry and Technology of Silicones, Academic Press, Inc., Orlando, Florida, 1968, Kap. 2.2, und A. Hunyar, Chemie der Silikone, Verlag Technik, Berlin 1952, Seiten 92 bis 94, beschrieben.

Die Konzentration an EtHSiCl₂ liegt üblicherweise bei 300 bis 5000 ppm; es können aber auch höhere oder niedrigere Konzentrationen an EtHSiCl₂ in den zu reinigenden Gemischen aus der Methylchlorsilansynthese enthalten sein.

Aus Gründen der Stöchiometrie muß zur vollständigen Entfernung der H-Silane pro Wasserstoffatom mindestens ein Chloratom aus den Chlorkohlenwasserstoffen vorhanden sein. Wenn die zu reinigenden Produktgemische aus der Methylchlorsilansynthese nicht die zur vollständigen Entfernung der H-Silane erforderliche Menge an Chlorkohlenwasserstoffen aufweisen, können dem Reaktionsgemisch weitere Chlorkohlenwasserstoffe zugesetzt werden.

Für das erfindungsgemäße Verfahren besonders geeignete Chlorkohlenwasserstoffe sind gesättigte Chlorkohlenwasserstoffe, die mindestens zwei Chloratome an dem gleichen Kohlenstoffatom aufweisen, insbesondere eine Trichlormethylgruppe aufweisen; ethylenisch ungesättigte Chlorkohlenwasserstoffe, die mindestens ein Chloratom an einem ungesättigten Kohlenstoffatom oder in Allylstellung aufweisen; und aromatische Chlorkohlenwasserstoffe, die mindestens ein Chloratom in Benzylstellung aufweisen. Bevorzugte Chlorkohlenwasserstoffe weisen 1 bis 18, insbesondere 1 bis 10, Kohlenstoffatome auf.

Bevorzugt werden Chlorkohlenwasserstoffe eingesetzt, deren Siedepunkte ebenso wie die Siedepunkte der Reaktionsprodukte dieser Chlorkohlenwasserstoffe sich um mindestens 8°C von dem Siedepunkt des Me₂SiCl₂ unterscheiden. Besonders bevorzugt werden Tetrachlormethan und insbesondere Benzotrichlorid (C₆H₅CCl₃) und Allylchlorid eingesetzt.

Das erfindungsgemäße Verfahren wird vorzugsweise unter Inertgasatmosphäre, wie unter Stickstoff-, Argon- oder Heliumatmosphäre, insbesondere unter Stickstoff- oder Argonatmosphäre, durchgeführt.

Das erfindungsgemäße Verfahren wird vorzugsweise bei einer Temperatur von 20 bis 150°C und beim Druck der umgebenden Atmosphäre durchgeführt. Es können aber auch höhere oder niedrigere Temperaturen und Drücke angewendet werden.

Bei dem erfindungsgemäßen Verfahren können inerte organische Lösungsmittel, wie Toluol, Xylol, Octan, verwendet werden, obwohl deren Mitverwendung nicht bevorzugt ist.

Der erfindungsgemäß verwendete Katalysator kann in der Flüssigphase oder in der Gasphase zum Einsatz kommen.

Das erfindungsgemäße Verfahren kann absatzweise, halbkontinuierlich oder vollkontinuierlich durchgeführt werden, wobei bevorzugt die vollkontinuierliche Fahrweise zum Einsatz kommt.

Bei kontinuierlicher Fahrweise beträgt die Verweilzeit des EtSiHCl₂ in Abhängigkeit von der Ausgangskonzentration des EtSiHCl₂ in einer bevorzugten Ausführungsform 0,5 bis 60 Sekunden, da kurze Kontaktzeiten bei kontinuierlich durchgeführten Verfahren zu hohen Raum/Zeit-Ausbeuten führen.

### Beispiele

In den nachfolgenden Beispielen sind, falls jeweils nicht anders angegeben,
a) alle Mengenangaben auf das Gewicht bezogen;
b)alle Drücke 0,10 MPa (abs.);
c)alle Temperaturen 20°C.

Des weiteren werden die folgenden Abkürzungen verwendet:
- Me:: Methylrest
- Et:: Ethylrest

### Beispiele 1 bis 6 (nicht erfindungsgemäß) und Beispiel 7 (erfindungsgemäß)

In einem Dreihalskolben mit aufgesetztem Thermometer, Tropftrichter und Intensivrückflußkühler mit aufgesetztem Schutzgasanschluß wurden A g trockener Katalysator und 35 g (0,3 mol) Methyldichlorsilan vorgelegt und mit Argon inertisiert. Zu dieser Mischung wurden unter Rühren mit einem Magnetrührer 25 g (0,3 mol) Allylchlorid langsam über den Tropftrichter zugegeben und die Reaktionsmischung 1 Stunde lang auf 40°C erwärmt. Anschließend wurde eine Probe gezogen und mittels ¹H-NMR analysiert.

| **Beispiel** | **Katalysator** | **A** | **¹H-NMR MeHSiCl₂:MeSiCl₃** | | |
|---|---|---|---|---|---|
| **1** | Cu/C *) | 0,5 | 100 | 0 | keine Reaktion |
| **2** | Ru/C **) | 0,5 | 96,5 | 3,5 | schwache Gasentwicklung |
| **3** | Ni/C ***) | 0,5 | 100 | 0 | keine Reaktion |
| **4** | Aktivkohle | 0,5 | 100 | 0 | keine Reaktion |
| **5** | FeCl₃ | 0,5 | 100 | 0 | keine Reaktion |
| **6** | CuCl₂ | 0,5 | 100 | 0 | keine Reaktion |
| **7** | Pd/C ****) | 0,5 | 0 | 100 | exotherme Reaktion, Gasentwicklung |

| | | | | | |
|---|---|---|---|---|---|
| *) Kupfer auf Graphit 5 %ig, von Johnson Matthey | | | | | |
| **) Ruthenium auf Kohle 5 %ig, von Janssen Chimica | | | | | |
| ***) Nickel auf Graphit 75 %ig, von Johnson Matthey | | | | | |
| ****) Palladium auf Aktivkohle 5 %ig, von Strem Chemicals Inc. | | | | | |

### Beispiele 8 bis 10 (erfindungsgemäß)

In einem Dreihalskolben mit aufgesetztem Thermometer, Tropftrichter und Intensivrückflußkühler mit aufgesetztem Schutzgasanschluß wurden 0,5 g trockenes Palladium auf Aktivkohle (5 % Palladium, 95 % Aktivkohle, von Strem Chemicals Inc.) und 35 g (0,3 mol) Methyldichlorsilan vorgelegt und mit Argon als Schutzgas gespült. Zu dieser Mischung wurden B g einer chlororganischen Verbindung zugetropft und die Reaktionsmischung X Stunden lag auf Y°C erwärmt. Anschließend wurde eine Probe gezogen und mittels ¹H-NMR analysiert.

| **Nr.** | **Chlorkohlenwasserstoff** | **B** | **X** | **Y** | **HMeSiCl₂: MeSiCl₃** | |
|---|---|---|---|---|---|---|
| **8** | Allylchlorid | 25 | 1 | 40 | 0 | 100 |
| **9** | Tetrachlorkohlenstoff | 12 | 1 | 50 | 0 | 100 |
| **10** | Benzylchlorid | 39 | 1 | 60 | 87 | 13 |

### Beispiele 11 und 12 (erfindungsgemäß) und Beispiele 13 und 14 (nicht erfindungsgemäß)

In einem Dreihalskolben mit aufgesetztem Thermometer, Tropftrichter und Intensivrückflußkühler mit aufgesetztem Schutzgasanschluß wurden A g trockener Katalysator vorgelegt und mit Argon inertisiert. Zu dem Katalysator wurden unter Rühren mit einem Magnetrührer 50 g Dimethyldichlorsilan über den Tropftrichter zugegeben. Das Me₂SiCl₂ entstammte einem Produktstrom aus der Direktsynthese und wies neben nicht genau identifizierten Alkanen, Alkenen und Chlorkohlenwasserstoffen 520 ppm Ethyldichlorsilan als Verunreinigungen auf. Nach 5 Minuten Reaktionszeit bei Raumtemperatur wurde ein Probe gezogen und mittels Gaschromatographie (GC) analysiert. Anschließend wurde die Reaktionsmischung 5 Minuten lang auf 60°C erwärmt und ebenfalls mittels GC analysiert.

| **Nr.** | **Katalysator** | **A** | **Temperatur** | **EtHSiCl₂** |
|---|---|---|---|---|
| **11** | Pd/C *) | 0,5 | 20°C | < 1 ppm |
| **12** | Pd/C *) | 0,5 | 60°C | < 1 ppm |
| **13** | Aktivkohle | 0,5 | 20°C | 403 ppm |
| **14** | Aktivkohle | 0,5 | 60°C | 308 ppm |

| | | | | |
|---|---|---|---|---|
| *) Palladium auf Aktivkohle 5 %ig, von Strem Chemicals Inc. | | | | |

### Beispiel 15 (erfindungsgemäß)

In einem Dreihalskolben mit aufgesetztem Thermometer, Tropftrichter und einer Spiegelglaskolonne mit aufgesetztem Destillationskopf wurden unter Stickstoffatmosphäre 100 g destilliertes Me₂SiCl₂ aus der Direktsynthese vorgelegt. Neben Alkanen, Alkenen und Chlorkohlenwasserstoffen wies dieses Me₂SiCl₂ 467 ppm EtHSiCl₂ als Verunreinigungen auf.

33 g Katalysator (gekörnte Aktivkohle mit 1,4 Gew.-% Palladium beschichtet) wurden in die Kolonne eingebracht.

Das Me₂SiCl₂ im Kolben wurde unter Rühren verdampft, durch die Kolonne geleitet und im Destillationskopf kondensiert und abgenommen. In dem Ausmaß, wie Destillat aus dem System entfernt wurde, wurde in den Kolben Me₂SiCl₂ zudosiert.

Nach 80 Minuten Laufzeit wurde die Reaktion abgebrochen und das Destillat mittels GC analysiert.

Die Destillatmenge betrug nach 80 Minuten 280 g (Massefluß 210 g/h); dies entspricht einer Verweilzeit von ca. 1,9 Sekunden bezogen auf Me₂SiCl₂-gasförmig über den Katalysator. Die Konzentration an EtHSiCl₂ im Destillat betrug 3,8 ppm.

### Beispiel 16 (erfindungsgemäß)

Beispiel 15 wurde wiederholt mit der Änderung, daß als Katalysator 29 g gekörnte Aktivkohle (mit 0,2 Gew.-% Palladium beschichtet) in die Kolonne eingebracht wurden.

Nach 110 Minuten Laufzeit wurde die Reaktion abgebrochen und das Destillat mittels GC analysiert. Die Destillatmenge betrug 415 g (Massefluß 226 g/h); dies entspricht einer Verweilzeit von ca. 1,8 Sekunden, bezogen auf Me₂SiCl₂-gasförmig über dem Katalysator. Die Konzentration an EtHSiCl₂ im Destillat betrug 3,0 ppm.

### Beispiele 17 bis 19 (erfindungsgemäß)

Ein 110 l Reaktor, gefüllt mit 50 kg Katalysator (gekörnte Aktivkohle mit 2 Gew.-% Pd beschichtet) wurde bei Raumtemperatur kontinuierlich mit einem Gemisch aus Dimethyldichlorsilan und Benzotrichlorid beschickt. Das Dimethyldichlorsilan entstammte einem Produktstrom aus der Direktsynthese und wies neben nicht genau identifizierten Alkanen, Alkenen und Chlorwasserstoffen auch Ethyldichlorsilan auf. Die Analysen vor und nach Reaktor erfolgten mittel GC.

| Nr. | Dimethyldichlorsilan [l/h] | Benzotrichlorid [g/h] | EtHSiCl₂ vor Reaktor [ppm] | EtHSiCl₂ nach Reaktor [ppm] |
|---|---|---|---|---|
| 17 | 500 | 200 | 74 | 9 |
| 18 | 1000 | 275 | 75 | 12 |
| 19 | 1500 | 275 | 85 | 24 |

## Patentansprüche

1. Verfahren zur Entfernung von Silanen mit direkt an Silicium gebundenen Wasserstoffatomen aus bei der Methylchlorsilansynthese anfallenden Produktgemischen, wobei die Silane mit direkt an Silicium gebundenen Wasserstoffatomen mit Chlorkohlenwasserstoffen in Gegenwart von Palladium oder Platin als Katalysatoren zu den entsprechenden Chlorsilanen umgesetzt werden.

2. Verfahren nach Anspruch 1, wobei EtSiHCl₂ entfernt wird.

3. Verfahren nach Anspruch 1 oder 2, wobei als Chlorkohlenwasserstoffe gesättigte Chlorkohlenwasserstoffe, die mindestens eine Trichlormethylgruppe aufweisen und/oder ethylenisch ungesättigte Chlorkohlenwasserstoffe, die mindestens ein Chloratom an einem ungesättigten Kohlenstoffatom oder in Allylstellung aufweisen und/oder aromatische Chlorkohlenwasserstoffe, die mindestens ein Chloratom in Benzylstellung aufweisen, eingesetzt werden.

4. Verfahren nach einem der Ansprüche 1 bis 3, wobei Benzotrichlorid eingesetzt wird.

5. Verfahren nach einem der Ansprüche 1 bis 4, wobei Allylchlorid eingesetzt wird.

6. Verfahren nach einem der Ansprüche 1 bis 5, wobei das zu reinigende Dimethyldichlorsilan bereits eine ausreichende Menge an Chlorkohlenwasserstoffen enthält, um die Silane mit direkt an Silicium gebundenen Wasserstoffatomen nahezu vollständig umzusetzen.

## Claims

1. Process for the removal of silanes containing hydrogen atoms bonded directly to silicon from product mixtures obtained during methylchlorosilane synthesis in which the silanes containing hydrogen atoms bonded directly to silicon are reacted with chlorinated hydrocarbons in the presence of palladium or platinum as catalysts to give the corresponding chlorosilanes.

2. Process according to Claim 1, in which EtSiHCl₂ is removed.

3. Process according to Claim 1 or 2, in which saturated chlorinated hydrocarbons which contain at least one trichloromethyl group and/or ethylenically unsaturated chlorinated hydrocarbons which contain at least one chlorine atom on an unsaturated carbon atom or in the allyl position and/or aromatic chlorinated hydrocarbons which contain at least one chlorine atom in the benzyl position are employed as chlorinated hydrocarbons.

4. Process according to any one of Claims 1 to 3, in which benzotrichloride is employed.

5. Process according to any one of Claims 1 to 4, in which allyl chloride is employed.

6. Process according to any one of Claims 1 to 5, in which the dimethyldichlorosilane to be purified already contains an adequate amount of chlorinated hydrocarbons for virtually complete reaction of the silanes containing hydrogen atoms bonded directly to silicon.

## Revendications

1. Procédé d'élimination de silanes ayant des atomes d'hydrogène liés directement au silicium des mélanges de produits formés lors de la synthèse de méthylchlorosilanes, selon lequel on transforme les silanes ayant des atomes d'hydrogène liés directement au silicium en les chlorosilanes correspondants par réaction avec des hydrocarbures chlorés en présence de palladium ou de platine métallique comme catalyseur.

2. Procédé selon la revendication 1, dans lequel on élimine EtSiHCl₂.

3. Procédé selon la revendication 1 ou 2, dans lequel on utilise comme hydrocarbures chlorés des hydrocarbures chlorés saturés contenant au moins un groupe trichlorométhyle et/ou des hydrocarbures chlorés à insaturation éthylénique contenant au moins un atome de chlore sur un atome de carbone insaturé ou en position allylique et/ou des hydrocarbures chlorés aromatiques contenant au moins un atome de chlore en position benzylique.

4. Procédé selon l'une des revendications 1 à 3, dans lequel on utilise du benzotrichlorure.

5. Procédé selon l'une des revendications 1 à 4, dans lequel on utilise du chlorure d'allyle.

6. Procédé selon l'une des revendications 1 à 5, dans lequel le diméthyldichlorosilane à purifier contient déjà une quantité d'hydrocarbures chlorés suffisante pour transformer de façon pratiquement complète les silanes ayant des atomes d'hydrogène liés directement au silicium.
